(19) Europäisches Patentamt
European Patent Office
Office européen des brevets

(11) **EP 4 745 845 A1**

(12) **EUROPEAN PATENT APPLICATION**

(43) Date of publication:
**20.05.2026 Bulletin 2026/21**

(21) Application number: **24213065.6**

(22) Date of filing: **14.11.2024**

(51) International Patent Classification (IPC):
**G06N 3/0495** *(2023.01)*   **G06N 3/0442** *(2023.01)*
**G06N 3/045** *(2023.01)*   **G06N 3/0475** *(2023.01)*

(52) Cooperative Patent Classification (CPC):
**G06N 3/0495; G06N 3/0442; G06N 3/045; G06N 3/0475**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Axelera AI BV**
**5656 AE Eindhoven (NL)**

(72) Inventors:
• **Eleftheriou, Evangelos**
  **5656 AE Eindhoven (NL)**
• **Dazzi, Martino**
  **5656 AE Eindhoven (NL)**
• **AKHONDZADEH TEZERJANI, Mohammad Sadegh**
  **5656 AE Eindhoven (NL)**

(74) Representative: **E. Blum & Co. AG**
**Franklinturm**
**Hofwiesenstrasse 349**
**8050 Zürich (CH)**

(54) **OPTIMISING QUANTISATION IN ATTENTION-BASED NEURAL NETWORKS THROUGH TIGHTENING OF DISTRIBUTIONS OF INPUT TENSORS TO OFFLINE TRANSFORMATIONS**

(57)    The invention is notably directed to a computer-implemented method of optimising quantisation in a neural network (40) having an attention mechanism. The dataflow architecture of the neural network includes quantisation stages ($41_Q$ - $47_Q$) downstream of respective transformation stages, which involve transformations that can be represented through transformation matrices and include offline transformations. The method first comprises optimising a stage (41, $42_3$) of the transformation stages for subsequent quantisation by a respective one of the quantisation stages ($41_Q$, $42_Q$), by optimising an offline transformation involved in said stage in an unsupervised manner, the offline transformation representable through a dot product of an offline input tensor and an offline transformation matrix, using an objective function designed to reduce a degree of tailedness of a distribution of tensor components of a tensor resulting from said dot product. Next, said stage is precomputed at least partly by performing the optimised offline transformation as an affine transformation based on said dot product, and stored to ready the neural network for inferences. The invention is further directed to related methods and computer programs.

FIG. 4

**Description**

TECHNICAL FIELD

The invention relates in general to the field of computer-implemented methods of, and computer programs for, optimising quantisation in neural networks having attention mechanisms, as well as computer-implemented methods of executing optimised neural networks. In particular, it is directed to methods that optimise quantisation by tightening (i.e., reducing a degree of tailedness of) the distributions of operands (i.e., tensors) of offline transformations, where each of offline transformations can for instance be computed as a dot products of an offline input tensor and an optimised offline transformation matrix (e.g., a rotation matrix).

BACKGROUND

With the rise of Large Language Models (LLMs) for sequence-to-sequence tasks, quantisation become a necessity due to its significant impact on efficiency, energy savings, cost reduction, deployment feasibility, and latency reduction. By reducing the precision of model weights and activations (typically from 32-bit or 16-bit floating point to lower-bit formats like 8-bit integer or 4-bit), quantisation lowers memory usage and accelerates computation. This enables the execution of LLMs on less powerful hardware, such as mobile devices and edge computing platforms, and reduces energy consumption, something that is particularly advantageous in power-constrained computational environments.

Furthermore, quantisation decreases operational costs, particularly in cloud environments, and enhances the feasibility of real-time applications by minimizing inference time, thereby improving the user experience. Quantisation thus plays a critical role in making LLMs more efficient, cost-effective, and widely deployable without compromising performance.

Quantisation in neural network embodying LLMs suffers from several challenges; this necessitates more complex algorithms in comparison with other classes of neural networks such as Convolutional Neural Networks (CNNs). Precision loss and small dynamic range is a primary concern, as reducing bit-width can degrade the model accuracy. The model sensitivity to quantisation requires tailored approaches to uniformize the distributions of non-uniform weights and activations. Moreover, it has been observed by scaling models over billions of parameters that some outliers in the activation layer appear, which cannot be ignored or clipped.

Well-established techniques, such as Quantisation-Aware Training (QAT), add complexity and require computationally-expensive training processes, which makes their applicability to LLMs unfeasible. Managing dynamic ranges to avoid saturation or underflow, accounting for cross-layer dependencies, and ensuring scalability for large models are additional difficulties.

Advanced algorithms are essential to address these challenges and effectively leverage quantisation benefits in LLMs.

The following documents form part of the background art:

- Ashkboos, Saleh, et al. "Quarot: Outlier-free 4-bit inference in rotated LLMs." arXiv preprint arXiv:2404.00456 (2024), hereafter referred to as "Quarot";

- Liu, Zechun, et al. "SpinQuant: LLM quantisation with learned rotations." arXiv preprint arXiv:2405.16406 (2024), hereafter referred to as "SpinQuant"; and

- Li, Jun, Li Fuxin, and Sinisa Todorovic. " Efficient Riemannian Optimization on the Stiefel Manifold via the Cayley Transform" arXiv preprint arXiv:2002.01113 (2020).

The problem of non-uniformity of the activation and existence of outliers in activations can be addressed by linearly transforming the activations (this linear transform may need to be orthogonal in some cases). However, determining this transformation can be challenging. Quarot proposed using the Walsh-Hadamard matrix, while SpinQuant offers an end-to-end model training, whereby the transformation is trained by backpropagating through all layers to optimise the model's loss function. This approach can be very expensive and time-consuming (1:30 hour training for LLaMA 7B with eight A100 GPUs, as per the authors. This figure raises 12 hours of training for the LLaMA 70B model.

Beyond LLMs, quantisation is further desired in large neural networks, leading to similar observations and issues. Therefore, a novel approach is needed to improve efficiency in determining the transformations needed for activations and, more generally, for all intermediate results as generated by neural networks, so as to be able to quantise efficiently and meaningfully such results.

SUMMARY

According to a first aspect, the invention is embodied as a computer-implemented method of optimising quantisation in a neural network (NN). This NN is assumed to have an attention mechanism. In addition, the dataflow architecture of the NN is assumed to include quantisation stages (or nodes), which are arranged downstream of respective transformation stages. In general, the transformation stages involve transformations that can be represented through transformation matrices. Such transformations include offline transformations. In addition, they typically include online transformations, too.

The method basically revolves around optimising a transformation stage that involves an offline transformation, prior to precomputing and storing the precomputed stage, so as to ready the neural network for inferences. In detail, this transformation stage is optimised for subsequent quantisation by a respective quantisation stage. This is achieved by optimising the offline transformation involved in this stage, in an unsupervised manner. The offline transformation is one that can be represented through a dot product of an offline input tensor (i.e., a tensor used as input to the offline transformation) and an offline transformation matrix (i.e., the matrix underlying the offline transformation).

This optimisation relies on an objective function, which is designed to effectively reduce the degree of tailedness (e.g., the kurtosis) of a distribution of tensor components of a tensor resulting from this dot product. This distribution is often referred to as a target distribution herein. As a result of this unsupervised optimisation, the degree of tailedness of the target distribution (after optimisation) is reduced in comparison with the degree of tailedness that this distribution would have without optimisation. In addition, the degree of tailedness of the target distribution is typically reduced with respect to the degree of tailedness of the distribution of tensor components of the offline input tensor, in practice.

The stage is then precomputed, at least partly, by performing (i.e., computing) the optimised offline transformation as an affine transformation based on said dot product. The precomputed stage is eventually stored, so as to ready the neural network for inferences. Still, further steps may be required, depending on the NN configuration, in order to definitely ready a computational model embodying the NN for inferences.

The above method proposes a simple, and yet effective, way of optimizing an offline transformation involved in a transformation stage of an NN, in an unsupervised manner (no training is required). This optimization relies on an objective function designed to reduce the degree of tailedness of the target distribution. For example, use can be made of a kurtosis regularization to find an orthogonal transformation that minimizes the kurtosis loss, which measures how "fat" a distribution's tails are compared to the centre. The tails of the distribution reflect events occurring outside the normal range, i.e., outliers, which impair the subsequent quantization.

Once optimized and precomputed for inferencing purposes, the offline transformation stage allows a more effective quantization and can thus be more efficiently used at runtime (i.e., for inferencing purposes). As a result, the present approach allows a more effective use of NNs involving attention mechanisms, such as decoder-only transformers. Compared with previous approaches, the present approach can be orders of magnitudes more efficient. As a result of the quantisation that will then occur at runtime (i.e., upon inferencing), the execution of the NN will requires less memory storage and access, so that the optimised NN can be used to perform inferences more efficiently.

Several strategies can be contemplated to optimise the transformation stage. E.g., one may optimise any subset of the operands (i.e., tensors) involved, or possibly all of them (should all these operands be offline operands). A simple approach is to optimize the underlying transformation matrix, and preferably only this matrix. That is, in preferred embodiments, the offline transformation is optimised by optimising the offline transformation matrix, using said objective function. Typically, only this offline transformation matrix is optimised in the transformation stage, in the interest of simplicity and consistency (the same scheme can be applied throughout various stages to be optimised). The other operands are not optimised, unless they have already been optimised during a previous optimisation cycle; they may also be optimised during a subsequent optimisation cycle, as in embodiments discussed herein. The offline transformation matrices are preferably rotation matrices. For example, a transformation stage may involve two rotation matrices, which are successively optimised. Choosing to optimize the offline matrix allows the same optimization scheme to be applied to different offline stages, as in embodiments herein. Still, different implementation detail may be contemplated. E.g., one rotation matrix may be constrained to be orthogonal, while the next rotation matrix will be constrained to be full-rank.

In preferred embodiments, the affine transformation performed consists of a computation of the dot product of the offline input tensor and the offline transformation matrix as optimised. This amounts to fusing the offline input tensor and the offline transformation matrix. For example, the offline transformation matrix may be absorbed in a weight matrix. And this gives rise to more efficient (faster) inferencing steps at runtime.

In embodiments, the objective function used to optimise the offline transformation includes a measure of a standardized moment of degree $2 \times q$ of the target distribution, where $q \geq 2$. Preferably, said measure is a measure of a kurtosis of the target distribution (i.e., $q = 2$). Such measures are particularly simple measures, which adequately reduce the tailedness of the resulting tensor component distributions in practice. Very satisfactory results were obtained by using the kurtosis, which adequately reduces the tails, yet without resulting in distributions that are too peaked at the centre.

In embodiments, two stages of the transformation stages have a data dependence in the dataflow architecture, whereby an outcome of a first stage of the two stages determines an input tensor involved in a second stage of the two stages.

In certain NN configurations, each of the two stages involves an offline transformation; the two transformations concerned can typically be represented through two distinct matrices. In such cases, the step of optimising a stage is advantageously performed in respect of each of the two stages, albeit in an orderly manner, in accordance with said data dependence.

In other NN configurations, the first stage involves an offline transformation, while the second stage involves this offline transformation or an inverse transformation thereof. In such cases, the optimisation step may have to be performed in respect of the first stage. For example, one may want to optimise a first rotation matrix involved in the first stage. Then, the second stage may advantageously be precomputed (at least partly) after having optimised the first stage, in accordance with the data dependence, so as to take advantage of the optimisation performed in respect of the first stage, even if the second stage does not require any optimisation going beyond the optimisation performed for the first stage.

In embodiments, the optimised stage is a first transformation stage of the transformation stages; said offline transformation is a first offline transformation, which can be represented through a first offline transformation matrix. The first transformation stage is optimised for subsequent quantisation by a respective one of the quantisation stages. Besides, the transformation stages may further include several second transformation stages (e.g., three second transformation stages), which are arranged in parallel, downstream of the first transformation stage. Such a configuration may for instance be required by a multi-head attention mechanism to focus on different parts of an input text simultaneously and capture various aspects of the context. Each of the second transformation stages can typically be represented by a respective dot product, which may for instance involve an inverse matrix of the first offline transformation matrix and a respective weight matrix. In such cases, one may seek to optimise the first transformation stage, prior to precompute any of the second stages. In addition, a given one of the second stage may possibly involve a second offline transformation matrix. In such a case, said given one of the second stage may have to be optimised after optimising the first stage but prior to precomputing it.

In embodiments, the first offline transformation matrix is an orthogonal matrix (e.g., a rotation matric, as noted above). That is, at the step of optimising the first transformation stage, the first offline transformation is constrained to be representable through this orthogonal matrix. In particular, the first offline transformation may advantageously be constrained by optimising on a Stiefel manifold, preferably based on an iterative Cayley transform.

This is especially advantageous where the optimised stage is followed by a Root Mean Square Normalization. In that respect, in embodiments, said dataflow architecture further comprises a root mean square normalization layer between the first transformation stage and its respective quantisation stage. Conversely, it may be sufficient, when optimising a dependent stage, to constrain a second offline transformation matrix involved therein to be a full-rank matrix.

In embodiments, the method further comprises, after having optimised the first offline transformation, precomputing each stage of the several second transformation stages, at least partly, by computing a respective affine transformation in accordance with the respective dot product and an outcome of the first offline transformation, as optimised, prior to storing said each stage to ready the neural network for inferences.

In embodiments, a given second stage of the several second transformation stages is one that can be represented as a dot product of the inverse matrix of the first offline transformation matrix, the respective weight matrix, and a second offline transformation matrix. In that case, the method advantageously comprises, after having optimised the first offline transformation matrix and prior to precomputing the given second stage, optimising the given second stage in a same way as the first transformation stage, by optimising the second offline transformation matrix, using said objective function. The only difference is the input tensor, which normally differs from the input tensor used in the first transformation stage.

In embodiments, the transformation stages further include a third transformation stage, downstream of the first transformation stage and the several second transformation stages. The third transformation stage involves a further dot product, which is a dot product of an inverse transformation matrix of the second offline transformation matrix, a respective weight matrix, and the first offline transformation matrix. In that case, the method advantageously comprises, after having optimised the first offline transformation matrix and the second offline transformation matrix, precomputing the third transformation stage, at least partly, by computing said further dot product in accordance with the first offline transformation matrix and the second offline transformation matrix, as optimised, prior to storing the precomputed, third transformation stage, with a view to readying the neural network for inferences.

In embodiments, the transformation stages further include $n$ additional transformation stages arranged downstream of $n$ respective rotary positional embedding stages, themselves arranged downstream of $n$ respective ones of the several second transformation stages, where $n \geq 2$. Note, said given second stage is distinct from the $n$ respective ones of the several second transformation stages, and each of the $n$ additional transformation stages involves the same online transformation matrix (called first online transformation matrix herein). In that case, the $n$ additional transformation stages cannot be fully precomputed, because of the online matrix. However, they can still be partly precomputed, e.g., to fuse all offline tensors that can be fused.

In embodiments, the transformation stages further involve a second online transformation matrix downstream of the second transformation stages, but upstream of a respective quantisation stage, itself upstream of the third transformation stage. The third transformation stage further involves an inverse transformation matrix of the second online transformation matrix, whereby the third transformation stage is only partly precomputed.

In embodiments, the transformation stages further involve a third online transformation matrix as well as an inverse transformation matrix of the third online transformation matrix, downstream of the third transformation stage. The first online transformation and the third online transformation may possibly be implemented, each, as a Walsh-Hadamard transform. Relying on Walsh-Hadamard transformations is advantageous (albeit for online matrices only), as the Walsh-Hadamard transform can be implement in a fast manner due its recursive nature.

According to another aspect, the invention is embodied as a method of executing an NN having an attention mechanism, as described above. This method comprises optimising quantisation in the NN according to any embodiments of a method as described above in respect of the first aspect or the second aspect of the invention, prior to executing the NN for inferencing purposes. If necessary, inferences can be offloaded to a hardware accelerator. For instance, in embodiments, inferences are performed at a hardware accelerator device that includes processing means and at least one in-memory computing device, the latter having a crossbar array structure of cells designed to store weight values.

According to a final aspect, the invention is embodied as a computer program for optimising quantisation in an NN having an attention mechanism, as described above. The computer program comprises software code adapted to perform all the steps of a method according to any embodiments described above, whether in respect of the first aspect or the second aspect of the invention, when executed by processing means of a computer system. Note, this computer program may be embodied as a computer program product comprising a computer readable storage medium having program instructions embodied therewith, where the program instructions are executable by processing means, to cause the processing means to perform steps of such a method.

BRIEF DESCRIPTION OF THE DRAWINGS

These and other objects, features and advantages of the present invention will become apparent from the following detailed description of illustrative embodiments thereof, which is to be read in connection with the accompanying drawings. The illustrations are for clarity in facilitating one skilled in the art in understanding the invention in conjunction with the detailed description. In the drawings:

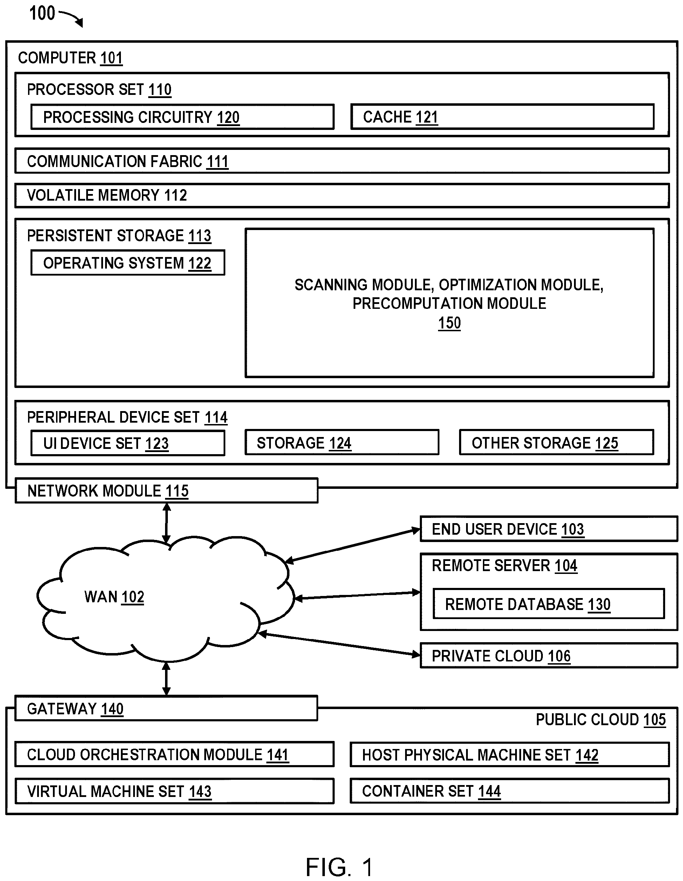

FIG. 1 schematically represents a general-purpose computerized system, suited for implementing one or more method steps of a method of optimising quantisation in a neural network, as in embodiments of the invention. A similar system may potentially be used to perform inferences with a neural network, once optimised for quantisation, as in embodiments;

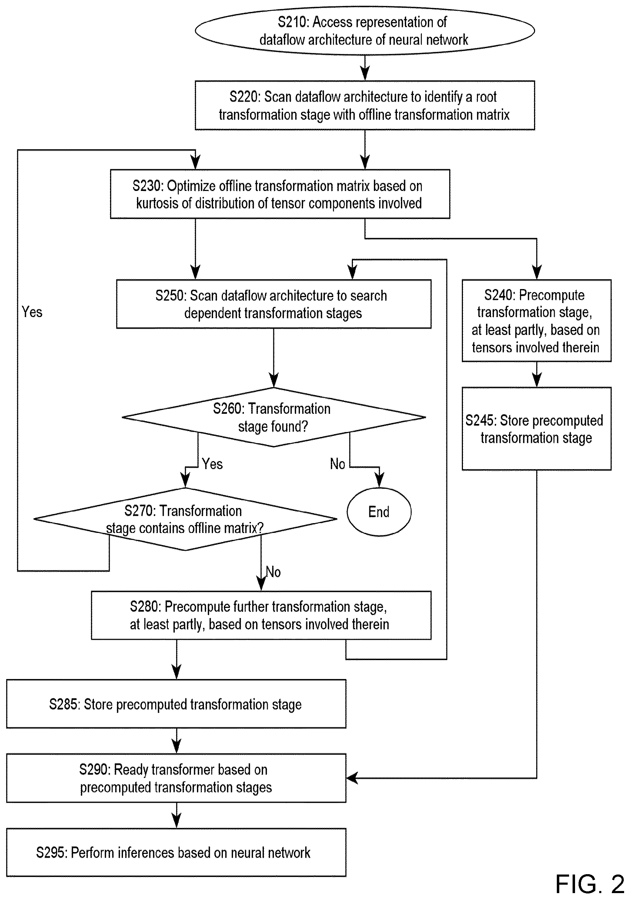

FIG. 2 is a flowchart illustrating high-level steps of a method of optimising quantisation in a neural network (and subsequently executing this neural network), according to embodiments;

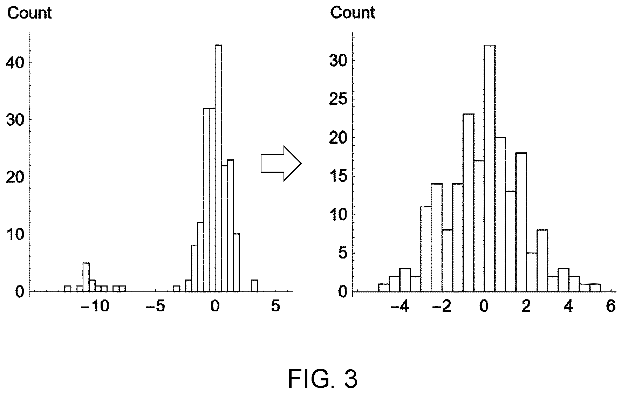

FIG. 3 shows two histograms. The histogram on the LHS reflects an initial distribution of tensor components of a tensor resulting from a dot product of an offline input tensor and an offline transformation matrix, as involved in an offline transformation of a given transformation stage of a neural network (in fact a decoder of a transformer in this example). Conversely, the histogram on the RHS reflects an optimised distribution of the same tensor components after unsupervised optimisation through an objective function designed to reduce a degree of tailedness (e.g., the kurtosis) of this distribution, as involved in embodiments; and

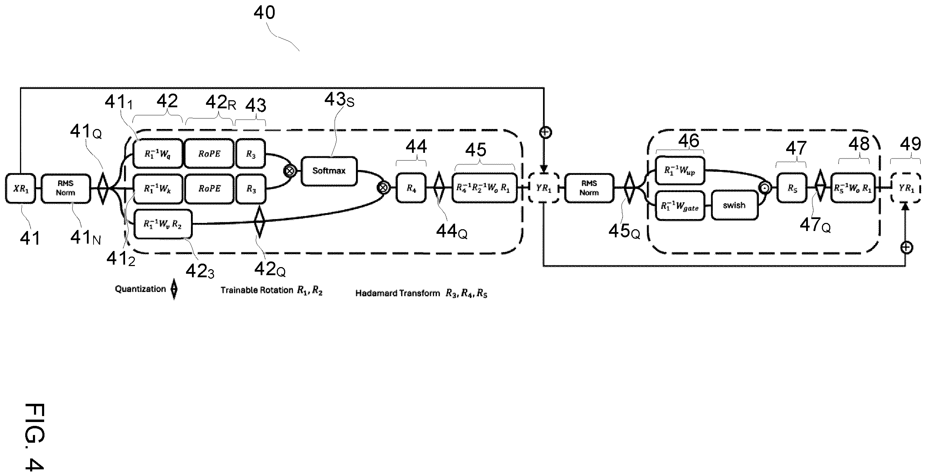

FIG. 4 is a dataflow diagram of a neural network (a decoder-only transformer embodying a large language model), involving five linear transformations, where at least some of the transformations can be optimised and precomputed, to ready the decoder-only transformer for inferences, as in embodiments.

The accompanying drawings show simplified representations of devices or parts thereof, as involved in embodiments. Similar or functionally similar elements in the figures have been allocated the same numeral references, unless otherwise indicated.

Computerized methods, computer programs, and computer programs products embodying the present invention will now be described, by way of non-limiting examples.

DETAILED DESCRIPTION OF EMBODIMENTS OF THE INVENTION

The following description is structured as follows. General embodiments and high-level variants are described in section 1, together with particularly preferred embodiments. Section 2 addresses technical implementation details. Note, the present method and its variants are collectively referred to as the "present methods". All references Sn refer to methods steps of the flowcharts of FIG. 2, while numeral references pertain to devices, components, and concepts involved in embodiments of the present invention.

**1. General embodiments and high-level variants**

**1.1. Optimising quantisation in a neural network**

Referring to FIGS. 2 - 4, a first aspect of the invention concerns a computer-implemented method of optimising quantisation in a neural network (NN) 40, which is assumed to involve an attention mechanism.

The NN can for example be a decoder-only transformer, as assumed in FIG. 4. As illustrated in FIG. 4, the NN dataflow architecture includes various quantisation stages $41_Q$ - $47_Q$, which are arranged downstream of respective transformation stages 41 - 47. The transformation stages 41 - 47 involve transformations that can be represented through transformation matrices, such as matrices $R_1$, $R_2$, $R_3$, $R_4$, and $R_5$, and/or through inverse matrices of some of these matrices (i.e., $R_1^{-1}$, $R_2^{-1}$, $R_4^{-1}$, $R_5^{-1}$ in FIG. 4). That is, such transformations can generally be represented as operations (such as dot products) involving operands that can be represented as matrices. These transformation stages notably include offline transformations, which can be represented through matrices $R_1$ and $R_2$ in the example of FIG. 4.

The method basically revolves around optimising a transformation stage 41, $42_3$ (step S230 in the flow of FIG. 2) that involves an offline transformation, prior to precomputing (step S240) and storing (step S250) the precomputed stage to ready the neural network for inferences. Several optimisation and precomputation steps may possibly be performed, as suggested by the loop in FIG. 2.

In detail, a transformation stage 41, $42_3$ is optimised S230 for subsequent quantisation by a respective quantisation stage $41_Q$, $42_Q$. This is achieved by optimising the offline transformation involved in this stage 41, $42_3$, in an unsupervised manner, for efficiency. The offline transformation is assumed to be representable through a dot product of an offline input tensor (i.e., a tensor used as input to the transformation) and an offline transformation matrix (i.e., the matrix underlying the offline transformation). For example, in FIG. 4, each of the first and second transformation stages 41, $42_3$ is an offline transformation, which involves a respective matrix $R_1$, $R_2$. The first matrix $R_1$ is typically constrained to be an orthogonal matrix, while the second matrix $R_2$ may only have to be constrained to be a full-rank matrix, as discussed later.

The offline transformation is optimised using an objective function that is designed to reduce the degree of tailedness (e.g., the kurtosis) of a certain distribution, which is hereafter referred to as the "target distribution". This distribution is the distribution of tensor components of the tensor resulting from the dot product described above.

As a result of this unsupervised optimisation, the degree of tailedness of the target distribution (as optimised, see an example in FIG. 4, RHS) is reduced in comparison with the degree of tailedness that this distribution would have if it were not optimised. A non-optimised version of that distribution is shown in FIG. 4, LHS. For instance, the kurtosis of the optimised distribution shown in FIG. 4, RHS, is equal to 3.21, while the kurtosis of the non-optimised distribution (FIG. 4, LHS) is equal to 13.15. In addition, the degree of tailedness of the optimised distribution is typically reduced in comparison with the degree of tailedness of the distribution of tensor components of the offline input tensor, in practice.

Next, the transformation stage is precomputed S240 (at least partly) by performing the optimised offline transformation as an affine transformation, based on said dot product. Note, in certain cases, the affine transformation may reduce to a linear transformation and may, in fact, consist of computing that dot product, as discussed later in detail. The precomputed stage is eventually stored S245. The goal is to ready S290 the computational model for subsequent inferences (at runtime). Note, depending on the NN architecture and the number of transformation stages involved, additional operations may have to be performed to further optimise the NN for quantisation.

Some definitions follow. The present neural networks (NNs) are assumed to involve an attention mechanism, e.g., a self- or cross-attention mechanism. The NN itself may have a Recurrent Neural Network (RNN) architecture, a transformer architecture, or State Space Model (e.g., Mamba) architecture, among other examples. Application of the present methods can for instance be made to decoders of transformers, i.e., networks having a self-attention mechanism. In particular, the underlying NN can be a decoder-only transformer network (as assumed in FIG. 4), especially where the NN embodies a Large Language Model (LLM). However, the same approach can actually be applied to encoders of transformers. And other architectures can be contemplated, such as Mamba architectures, notably for LLMs or architectures relying on extended Long Short-Term Memory (xLSTM) structures, for example.

In each of the above examples of NN architecture, the underlying NN may embody an LLM. That said, non-LLM architectures are emerging, which also include self-attention blocks (e.g., YOLOv10, MobileNetv4). So, beyond LLM models, the present approach more generally concerns NN models involving attention mechanisms, starting with self-attention mechanisms (whether embodying LLMs or not), as such NNs typically involve fixed tensor components, whose distributions have outliers.

"Offline" here refers to preprocessing steps, i.e., operations that are precomputed before actually performing inferences with the underlying NN (yet after having trained the NN, see below), with a view to improving quantisation at runtime. Offline transformations involve, are associated with, or can somehow be represented by, offline matrices. The various transformation stages 41 - 47 may otherwise involve online transformations (as in preferred embodiments), which can be represented through operations involving online matrices. Offline matrices remain always the same, as opposed to online matrices, which change at runtime, depending on inferences performed at runtime. So, offline transformations are fixed, while online transformations change over time (i.e., upon inferencing).

In more detail, any offline transformation that is optimised at step S230 is assumed to be representable through one or more operations, which are affine transformations. Note, the fact that the present offline transformations can be represented through dot products of input tensors and offline matrices implies that such that such transformations will at least be linear transformations; they are more generally affine transformations. However, in typical embodiments, the offline transformations restrict to linear transformation (in the sense of homogeneous, linear operations), as in rotary transformations (i.e., rotations). In particular, an offline transformation may restrict to a mere dot product, e.g., of an input vector X and a rotation matrix $R_1$ (see stage 41 in FIG. 4).

The subsequent precomputation step S240 will be carried out precisely by performing this affine (or linear) transformation. This step S240 involves computing the dot product of an offline input tensor and an offline transformation matrix associated with the offline transformation as optimised. Such a dot product is also sometimes called an "inner product". The offline input tensor can be a mere vector (e.g., X in stage 41 in FIG. 4) or involve a matrix (e.g., the outcome of $R_1^{-1} W_v$ in stage 42s in FIG. 4). In principle, all the tensors involved herein are one-dimensional tensors (vectors) or two-dimensional tensors (i.e., matrices). Conversely, some of the transformation stages may involve online transformations, which are preferably implemented as Hadamard transforms. Note, online transformations may possibly be implemented in hardware, without explicitly involving any matrix or dot product. For example, use can be made of specialized hardware to perform Hadamard transforms.

Beyond rotations, the optimisation performed at step S230 can also be applied to other types of transformations, such as scaling operations or vector shifting operations. A scaling operation is a transformation that can be expressed as a multiplication by a diagonal matrix. A vector shifting operation can also be represented through operations involving matrices; a first matrix is modified by adding a row of ones. This, for example, can be used to represent a linear operation with bias as a single matrix multiplication. Thus, in general, offline transformations as contemplated herein do not necessarily restrict to mere dot products.

The optimisation discussed above in reference to step S230 can possibly be applied to several offline transformation stages. For example, this optimisation can be applied to each of the transformation stages 41, $42_3$ in FIG. 4. Moreover, in the present context, precomputations involving explicit calculations of dot products can also be applied (albeit in a partial manner only) to online transformations associated with online matrices, to the extent that some of the operands involved in such online transformations are fixed. That is, the present methods will preferably precompute everything that can be precomputed, e.g., starting with every dot product involving matrices $R_1, R_2, R_1^{-1}, R_2^{-1}$, as well as static weights $W_X$ in FIG. 4, as in preferred embodiments. When performed as dot products, such precomputations amount to fusing tensors. For example, an offline rotation matrix can be absorbed in an offline weight matrix.

Further comments are in order. Executing NNs typically causes to produce a vast amount of intermediate results, starting with activations, i.e., intermediate values produced in output of each neural layers. In the case of transformers and other LLM-related architectures, intermediate results are produced in output of each transformation stages, which typically involves rotations and Walsh-Hadamard matrices, notably in decoder-only transformer architectures. Such architectures advantageously involve quantisation nodes, in the interest of efficiency and speed. In general, quantisation can be applied to part or all of such intermediate results.

In the present context, the values to be quantised upon inferencing potentially concern neural weights and/or activation values, i.e., the values of the intermediate results. The above optimisation method is implemented at a point where the NN weights (and other parameters) have already been learned by training the NN. Such parameters may possibly have already undergone some sort of quantisation, if only to change a number presentation of the NN parameters involved. However, in likely embodiments, the NNs considered will typically involve parameter values that haven not been quantised yet.

Quantising means passing from a certain bit representation (e.g., single-precision floating-point format, or FP32) to a lower bit representation (e.g., 8-bit floating point [FP8] or 8-bit integer [INT8] format). I.e., quantisation refers to the process of reducing the number of bits used to represent the numbers (here the neural parameters). This process leads to a change of the numerical format. That said, quantisation may only concern a part of the represented number. For example, a floating-point number may be quantised to change the number of bits allocated to the mantissa or the exponent between the two floating point formats. Still, the overall number of bits may possibly remain unchanged. I.e., one part of the number (e.g., exponent or fraction) may be quantised to a lower bit width, while another part of this number is expanded. In usual applications, however, quantising numbers leads to decrease the global number of bits.

Now, quantisation can be problematic in the case where there are marked outliers. For example, consider an input FP32 array consisting of values {5.47, 3.08, -7.59, 0.00, -1.95, -4.57, 10.80}, here rounded to the nearest multiple of 0.01. Once quantised to the INT8 format, this array translates into the array {64, 36, -89, 0, -23, -54, 127}, which remains fairly true to the original array. Indeed, reconstructing the original values (i.e., translating this array back into the FP32 space) yields {5.44, 3.06, -7.57, 0., -1.96, -4.59, 10.8}, which is fairly close to the initial input array. However, consider now the input array {-0.59, -.21, -.07, 0.13, .28, .57, 256.00}, which has a marked outlier (256.00). Once quantised to the INT8 format, this array translates into {0, 0, 0, 0, 0, 0, 127}, whereby information as to the differences between all input values (but the last one) is lost.

In principle, the problem of non-uniformity of, and existence of outliers in, intermediate results can be addressed by linearly transforming the intermediate results. Note, the linear transform may have to be orthogonal in some cases, as discussed later. However, determining a suitable transformation can be challenging. Quarot proposed using the Walsh-Hadamard matrix, while SpinQuant offers an end-to-end model training, according to which the transformation is trained by back-propagating through all layers to optimise the model's loss function. This approach, however, can be expensive and time-consuming, as noted in the background section.

Conversely, the present approach proposes a simple (yet effective) way of optimising an offline transformation involved in a transformation stage of a transformer, in a manner that can be regarded as unsupervised, to the extent that no end-to-end training is required. This optimisation relies on an objective function designed to reduce the degree of tailedness of the target distribution. For example, use can be made of a kurtosis regularization to find an orthogonal transformation that minimizes the kurtosis loss. The kurtosis measures how fat a distribution's tail is compared to the centre. The tail of the distribution reflects events occurring outside the normal range, i.e., outliers, which impair the subsequent quantisation, as illustrated above.

Once optimised and precomputed for inferencing purposes, the transformation stage allows a more effective quantisation and can thus be more efficiently used at runtime, i.e., for inferencing. As a result, the present approach allows a more effective use of NNs involving attention mechanisms such as decoder-only transformers. Compared with previous approaches, the present approach can be orders of magnitudes more efficient. For example, by merely minimizing the kurtosis loss, it is no longer required do end-to-end training, and each layer can be separately optimised.

Note, the proposed approach conceptually differs from methods that train quantisation parameters on unlabelled data, using an objective function comparing quantised and non-quantised versions of the ANN. However, it remains that the proposed approach causes to modify matrices, as represented in the memory of the computer system performing the optimisation, and as subsequently stored with a view to performing inferences with the optimised NN. As a result of the quantisation that will occur at runtime (i.e., upon inferencing), the execution of the NN will requires less memory storage and access, so that, eventually, the optimised NN can be used to perform inferences more efficiently. Quantisation changes the way numbers are represented in memory. I.e., it changes the way the underlying computer works.

## 1.2. Preferred embodiments

All this is now described in detail, in reference to particular embodiments of the invention. To start with, different optimisation schemes can be contemplated for the offline transformation. A simple approach is to directly optimise the underlying transformation matrix. That is, in embodiments, the offline transformation is optimised S230 by optimising an offline transformation matrix $R_1$, $R_2$ associated with the offline transformation 41, $42_3$, using the same objective function as described above. In that case, the affine transformation comprises computing a dot product of the offline input tensor and the optimised offline transformation matrix. A homogeneous (i.e., linear) transformation such as a rotation actually restricts to a dot product. Conversely, additional operations may have to be performed, notably when performing a shifting operation, as noted earlier.

Dot products are efficiently and quickly performed. For instance, the present approach is particularly advantageous for offline rotary transformations as involved in, e.g., self-attention-based NNs. Besides rotation matrices, the offline transformation matrix $R_1$, $R_2$ may typically be required to be an orthogonal matrix, notably where the corresponding stage is followed by a Root Mean Square Normalization (RMSNorm) regularization, as RMSNorm has been shown to be equivariant with respect to orthonormal transformations. Moreover, in principle, the present approach can also be applied to scaling and shifting transformations, as noted earlier.

The objective function preferably includes a measure of a standardized moment of degree $k = 2 \times q$ of the target distribution, where $q \geq 2$. More preferably, use is made of a single standardized moment of degree $k$, where $k$ is even and larger than or equal to 4, to account for both tails on each side of the centre. For example, use can be made of $q = 2$ (i.e., $k = 2 \times q = 4$), which reflects the kurtosis of the distribution. The optimisation can for instance be adequately implemented as a Kurtosis regularization to find an optimal transformation that minimizes the Kurtosis loss. The kurtosis regularization is defined by:

$$Kurt[X] = E\left[\left(\frac{X - \mu}{\sigma}\right)^4\right]$$

The kurtosis *(Kurt)* measures how "fat" a distribution's tails are compared to the centre. The tails of the distribution reflect the number of events that occur outside the normal range. In the present context, the tails of the distribution represent the outliers, which can be problematic, as illustrated earlier. The kurtosis is a particularly simple measure, which adequately reduces the tailedness of the resulting tensor component distributions in practice. However, in principle, other measures of tailedness can be contemplated, e.g., involving one or more standardized moments of the distribution.

The offline transformation matrices $R_1$, $R_2$ (as notably involved in stages 41, 42) may typically be orthogonal matrices. They actually are rotation matrices in the example of FIG. 4. So, when optimising S230 the first transformation stage 41, the first offline transformation can be constrained to be representable through this orthogonal matrix. Since a kurtosis optimisation as described above (or, in fact, any optimisation based on a standardized moment) does not guarantee the transformation to be orthogonal, orthogonality can be enforced as a constraint.

Two approaches can be contemplated. A first possibility is to use a constraint that enforces orthogonality, by leveraging the property $R R^T = I$. The loss function can for instance be relaxed through a Lagrange multiplier and written as a regularization, i.e., $Kurt_{loss}[XR] + \lambda (RR^T - I)$. Another possibility is to optimise on a Stiefel manifold, e.g., based on an iterative Cayley transform. Details concerning a practical implementation can be found in the paper of Li et al, mentioned in the background section.

Consider two offline transformation stages of the NN. These will typically have a data dependence in the dataflow architecture of the NN. For example, in FIG. 4, the outcome of stage 41 determines the input tensor involved in stage $42_3$; each of the two stages 41, $42_3$ involves an offline transformation $R_1$, $R_2$. In such a case, the optimisation S230 is advantageously performed in respect of each of the two stages $R_1$, $R_2$, albeit in an orderly manner and in accordance with said data dependence (mind the loop S270 - S230 in FIG. 2). Each optimisation is performed using the same objective function. The first optimisation S230 reduces the degree of tailedness of the distribution of tensor components of the tensor resulting from $X R_1$. Conversely, the second optimisation S230 reduces the degree of tailedness of the distribution corresponding to the outcomes of the dot product of the input tensor (the tensor resulting from the RMSNorm $41_N$), $R_1^{-1}$, $W_v$, and $R_2$, hence the need to perform the successive optimisations in a given order, according to said data dependence. Another reason for doing so is that, in this example, the second stage $42_3$ involves $R_1^{-1}$, hence the need to first optimise the transformation 41 involving $R_1$, prior to optimising the transformation $42_3$ involving $R_1^{-1}$ ($R_1^{-1}$ is calculated once an optimised version of $R_1$ is found).

Certain types of data dependence in the dataflow architecture may further suggest optimising an antecedent stage prior to precomputing (if only partly) a dependent stage, regardless of whether the dependent stage is optimised or not. Consider, for example, the first stage 41 and a dependent stage $42_1$, $42_2$, 45, 46, 48. In this example, the first stage 41 involves the offline transformation $R_1$. The dependent stages $42_1$, $42_2$, 45, 46, 48 involves either $R_1$ or $R_1^{-1}$. In such cases, the stage 41 should be optimised S230 prior to precomputing (if only partly) S280 any of the dependent stages $42_1$, $42_2$, 45, 46, 48. In addition, stage $42_3$ should be optimised S230 prior to precomputing (if only partly) S280 any of the dependent stages 45, 46, 48. In the example of FIG. 4, the stages $42_1$, $42_2$, 45, 46, 48 are not optimised, at least not to the same extent as stages 41, $42_3$. Nevertheless, stages $42_1$, $42_2$, 45, 46, 48 can be precomputed (if only partly) after having optimised any antecedent stage 41, $42_3$, so as to leverage the optimised matrices $R_1$ and $R_2$ (or their inverse matrices).

Again, everything that can be precomputed will preferably be precomputed. For example, even if stage 45 involves an online rotation matrix ($R_4^{-1}$) and, as such, cannot be optimised to the same extent as the stage 41, stage 45 can still be precomputed partly, by precomputing the dot products corresponding to $R_2^{-1} W_0 R_1$. This amounts to fusing $R_2^{-1}$, $W_0$, and $R_1$.

### 1.3. Preferred flow of operations

FIG. 2 shows a preferred flow of operation. At step S210, a computer system (such as system 100 in FIG. 1) accesses a representation of the dataflow architecture of an NN 40 such as shown in FIG. 4. At step S220, the system 100 scans the dataflow architecture to identify transformation stages that involves an offline transformation matrix. Having identified S220 a root transformation (e.g., transformation 41 in FIG. 4), the system 100 optimises S230 the corresponding offline transformation matrix based on the kurtosis of the distribution of the tensor components of the tensor resulting from the dot product (e.g., the outcome of $X R_1$ in stage 41). Additional constraints can be used, e.g., an orthogonality or full-rank constraint, as indicated earlier. Once the offline transformation has been optimised, the corresponding stage is precomputed S240, at least partly, based on the tensors involved. The precomputed components are then stored S245 with a view to readying S290 the NN for inferences S295.

The system 100 subsequently scans S250 the dataflow architecture again (starting from the root stage 41) to try and identify dependent transformation stages. Once a dependent stage is found (S260: Yes), the system 100 checks S270 whether the transformation stage found contains an offline matrix. If so (S270: Yes), then this stage is again optimised S230 (i.e., the process loops back to step S230). Else (S270: No), the dependent stage is precomputed S280 (if only partly), by making use of any offline tensor (possibly optimised) available. The precomputed stage is then stored S245, as explained above. The process goes on until no further dependent stage is found (S260: No), in which case it stops.

Once all dependent stages have been precomputed S240, S280 and stored S245, S285, additional operations can be performed, if necessary, to further ready the NN for inferences. Once ready, the NN can be used to perform S295 inferences. If necessary, the NN parameters are exported to another computer system for inferencing purposes. Interestingly, this computer system may comprise one or more hardware accelerators, which may comprise one or more in-memory computing (IMC) devices. In embodiments, inferences are performed at a hardware accelerator device (not shown) that includes processing means and at least one IMC device, the latter having a crossbar array structure of cells designed to store weight values, as further discussed in section 1.5 below.

### 1.4. Example of application: decoder-only transformer for LLM

FIG. 4 represents a dataflow diagram of a Llama decoder architecture including five different linear transformations $R_1$, $R_2$, $R_3$, $R_4$, and $R_5$, which are rotations. Such transformations are introduced in the documents Quarot and SpinQuant, discussed in the background section. In these works, $R_1$ and $R_3$ need to be orthogonal, while $R_2$ and $R_4$ only need to be full rank.

In the example of decoding architecture shown in FIG. 4, the first stage 41 is optimised S230 for subsequent quantisation by the respective quantisation stages $41_Q$. As noted earlier, an RMSNorm layer $41_N$ is provided between the first stage 41 and its respective quantisation stage $41_Q$. Note, if $R_1$ is orthonormal, then we have RMSNorm $(X. R_1)$ = RMSNorm$(X). R_1$, hence the advantage of relying on orthonormal matrices.

The multi-head attention mechanism involves several "second" stages 42, namely three stages $42_1$, $42_2$, and $42_3$, arranged in parallel, downstream of the first stage 41. All stages 42 (including stage $42_3$) can be represented by a respective dot product, which involves, on the one hand, the inverse matrix $R_1^{-1}$ and, on the other hand, a respective weight matrix $W_q$, $W_k$, $W_v$. The latter respectively correspond to the query, key, and value matrices, forming part of the multi-head attention mechanism. They transform the input embeddings into queries, keys, and values, which are used to compute attention scores.

After having optimised S230 the first offline transformation, each of the second transformation stages can be precomputed S280, at least partly, by computing the respective affine transformation in accordance with the respective dot product and the outcome of the first offline transformation, as optimised. The precomputed transformations are then stored S285 to ready S290 the neural network for inferences. The stages $42_1$, $42_2$ do not require any extra optimisation (they already benefit from the optimised matrix $R_1$). However, the stage $42_3$, which can be represented as $R_1^{-1} W_v R_2$, is advantageously optimised with respect to $R_2$, step S230, prior to precomputing S280 it. The stage $42_3$ can be optimised in much the same way as the first stage 41, by optimising the second offline transformation matrix $R_2$, using said objective function, albeit based on a different input tensor.

As illustrated in FIG. 4, further transformation stages can be involved. For instance, a further stage 45 is provided downstream of the stages 41, 42. The stage 45 can be represented as $R_4^{-1} R_2^{-1} W_0 R_1$, where $R_4$ is an online matrix. The latter cannot be fused with the other (offline) components $R_2^{-1}$, $W_0$, and $R_1$. Still, after having optimised $R_1$ and $R_2$, the stage 45 can be partly precomputed S280, by computing the partial dot product $R_2^{-1} W_0 R_1$, in accordance with the offline matrices $R_1$, $R_2$ as previously optimised. The precomputed transformation 45 is then stored at step S285.

Additional transformation stages 43 are involved, downstream of respective rotary positional embedding (RopE) stages $42_R$, themselves arranged downstream of the second transformation stages $42_1$, $42_2$. Each of the additional transformation stages 43 involves a first online transformation matrix $R_3$. As noted above, the transformation stages further involve a second online transformation matrix $R_4$, downstream of the stage 42 and upstream of the respective quantisation stage $44_Q$, itself upstream of the stage 45. Since the transformation stage 45 involves the inverse matrix $R_4^{-1}$, this stage 45 can only be partly precomputed.

In the example of FIG. 4, the transformation stages further involve a third online transformation matrix $R_5$ as well as an inverse transformation matrix $R_5^{-1}$ thereof. The first online transformation (involving $R_3$) and the third online transformation (involving Rs) are advantageously implemented, each, as a Walsh-Hadamard transform. Note, $R_3$ and $R_5$ refer to Walsh-Hadamard matrices as used in the corresponding Walsh-Hadamard transforms. More details concerning such transforms can be found in the papers cited in the background section. Incidentally, one my possibly remove removes $R_4$. However, this would likely not substantially improve the performance in practice as $R_4$ is typically a rather small matrix.

The decoder-only architecture shown in FIG. 4 involves additional components, such as $W_{up}$ (Update or Output Projection Matrix, which projects the attended values back to the original embedding space, producing the output of the attention mechanism) and $W_{gate}$ (Gating Matrix, used in the gating mechanism to control the flow of information), the latter followed by a swish activation function. The documents Quarot and SpinQuant, discussed in the background section, provide additional explanations that may be useful to understand the architecture shown in FIG. 4 and the quantities involved in it.

### 1.5. Other aspects of the invention

Another aspect concerns a method of executing an NN 40 as described above, after having optimised this NN. This method basically revolves around optimising quantisation in the NN, in accordance with any embodiment as described earlier in respect of the first aspect of the invention, prior to executing S295 the NN 40 for inferencing purposes.

As noted earlier too, after optimisation, the NN parameters may advantageously be exported to another computer system for inferencing purposes. For example, this other computer system may comprise one or more hardware accelerators, such as one or more in-memory computing (IMC) devices.

A particularly efficient IMC device in one in which the crossbar array structure includes N input lines and $M$ output lines, which are interconnected at crosspoints defining $N \times M$ cells, where $N \geq 2$ and $M \geq 2$. The cells include respective memory systems, each designed to store $K$ weights, where $K \geq 2$. That is, the crossbar array structure includes $N \times M$ memory systems, which, as a whole, are adapted to store $K$ sets of $N \times M$ weights to perform MAC operations. The device further includes a selection circuit connected to the $N \times M$ memory systems. The selection circuit is configured to select a weight from the $K$ weights of each of the memory systems and set the selected weight as an active weight, so as to enable $N \times M$ active weights for the $A \times M$ cells. The device additionally includes an input unit, which is configured to apply signals encoding a vector of $N$ components to the $N$ input lines of the crossbar array structure to cause the latter to perform multiply-accumulate (MAC) operations based on this vector and the $N \times M$ active weights, as enabled by the selection circuit, in operation. The device further includes a readout unit, which is configured to read out output signals obtained in output of the $M$ output lines.

Referring to FIG. 1, a final aspect of the invention concerns a computer program for optimising quantisation in an NN 40 as described earlier. The computer program comprises software code adapted to perform a method according to any of the embodiments described above when executed by processing means. In addition to instructions aiming at optimising the NN, This program may further contain instructions related to subsequent execution of the NN (for inferencing purposes), including instructions to be used when offloading operations to an IMC device. This computer program may possibly be embodied as a computer program product. The latter comprises a computer readable storage medium having program instructions embodied therewith, where the program instructions are executable by some processing means, e.g., of the system 100 shown in FIG. 1, to cause the processing means to perform steps of such a method. More details are provided in section 2.

The above embodiments have been succinctly described in reference to the accompanying drawings and may accommodate a number of variants. Several combinations of the above features may be contemplated.

## 2. Specific embodiments - Technical implementation details

Various aspects of the present disclosure are described by narrative text, flowcharts, block diagrams of computer systems and/or block diagrams of the machine logic included in computer program embodiments or computer program product (CPP), embodiments. With respect to any flowcharts, depending upon the technology involved, the operations can be performed in a different order than what is shown in a given flowchart. For example, again depending upon the technology involved, two operations shown in successive flowchart blocks may be performed in reverse order, as a single integrated step, concurrently, or in a manner at least partially overlapping in time.

CPP embodiment is a term used in the present disclosure to describe any set of one, or more, storage media (also called mediums) collectively included in a set of one, or more, storage devices that collectively include machine readable code corresponding to instructions and/or data for performing computer operations specified in a claim. A storage device is any tangible device that can retain and store instructions for use by a computer processor. Without limitation, the computer readable storage medium may be an electronic storage medium, a magnetic storage medium, an optical storage medium, an electromagnetic storage medium, a semiconductor storage medium, a mechanical storage medium, or any suitable combination of the foregoing. Some known types of storage devices that include these mediums include: hard disk, random access memory (RAM), read-only memory (ROM), erasable programmable read-only memory (EPROM or Flash memory), static random-access memory (SRAM), compact disc read-only memory (CD-ROM), digital versatile disk (DVD), memory stick, floppy disk, mechanically encoded device (such as punch cards or pits / lands formed in a major surface of a disc) or any suitable combination of the foregoing.

A computer readable storage medium is not to be construed as storage in the form of transitory signals per se, such as radio waves or other freely propagating electromagnetic waves, electromagnetic waves propagating through a waveguide, light pulses passing through a fibre optic cable, electrical signals communicated through a wire, and/or other transmission media. As will be understood by the skilled person, data is typically moved, on occasions, during normal operations of a storage device, such as during access, de-fragmentation, or garbage collection, but this does not render the storage device as transitory because the data is not transitory while it is stored.

Computing environment 100 is an example of an environment for the execution of at least some of the computer code involved in performing the present methods, such as steps of scanning S220, optimising S230, and precomputing S240, S280 transformation stages (see block 150 of FIG. 1), as described in section 1. In addition to block 150, the computing environment 100 includes, for example, computer 101, wide area network (WAN) 102, end user device (EUD) 103, remote server 104, public cloud 105, and private cloud 106. In this embodiment, computer 101 includes processor set 110 (including processing circuitry 120 and cache 121), communication fabric 111, volatile memory 112, persistent storage 113 (including operating system 122 and block 150, as identified above), peripheral device set 114 (including user interface (UI) device set 123, storage 124, and peripheral storage 125), and network module 115. Remote server 104 includes remote database 130. Public cloud 105 includes gateway 140, cloud orchestration module 141, host physical machine set 142, virtual machine set 143, and container set 144.

COMPUTER 101 may take the form of a desktop computer, laptop computer, tablet computer, smart phone, smart watch or other wearable computer, mainframe computer, or any other form of computer or mobile device now known or to be developed in the future that is capable of running a program, accessing a network, or querying a database, such as remote database 130. Computer 101 is assumed to include one or several interface units that allows it to receive 3D images. As is well understood in the art of computer technology, and depending upon the technology, performance of a computer-implemented method may be distributed among multiple computers and/or between multiple locations. That said, the following discussion is focused on a single computer, specifically computer 101, in the interest of simplicity. Computer 101 may possibly be in a cloud.

PROCESSOR SET 110 includes one, or more, computer processors of any type now known or to be developed in the future. Processing circuitry 120 may be distributed over multiple packages, for example, multiple, coordinated integrated circuit chips. Processing circuitry 120 may implement multiple processor threads and/or multiple processor cores. Cache 121 is memory that is located in the processor chip package(s) and is typically used for data or code that should be available for rapid access by the threads or cores running on processor set 110. Cache memories are typically organized into multiple levels depending upon relative proximity to the processing circuitry. Alternatively, some, or all, of the cache for the processor set may be located off chip.

Computer readable program instructions are typically loaded onto computer 101 to cause a series of operational steps to be performed by processor set 110 of computer 101 and thereby effect a computer-implemented method, such that the instructions thus executed will instantiate the methods specified in flowcharts and/or narrative descriptions of computer-implemented methods included in this document (collectively referred to as the inventive methods). These computer readable program instructions are stored in various types of computer readable storage media, such as cache 121 and the other storage media discussed below. The program instructions, and associated data, are accessed by processor set 110 to control and direct performance of the inventive methods. In computing environment 100, at least some of the instructions for performing the inventive methods may be stored in block 150 in persistent storage 113.

COMMUNICATION FABRIC 111 is the signal conduction path that allows the various components of computer 101 to communicate with each other. Typically, this fabric is made of switches and electrically conductive paths, such as the switches and electrically conductive paths that make up buses, bridges, physical input / output ports and the like. Other types of signal communication paths may be used, such as fibre optic communication paths and/or wireless communication paths.

VOLATILE MEMORY 112 is any type of volatile memory now known or to be developed in the future. Examples include dynamic type random access memory (RAM) or static type RAM. Typically, volatile memory 112 is characterized by random access, but this is not required. In computer 101, the volatile memory 112 is located in a single package and is internal to computer 101, but, alternatively or additionally, the volatile memory may be distributed over multiple packages and/or located externally with respect to computer 101.

PERSISTENT STORAGE 113 is any form of non-volatile storage for computers that is now known or to be developed in the future. The non-volatility of this storage means that the stored data is maintained regardless of whether power is being supplied to computer 101 and/or directly to persistent storage 113. Persistent storage 113 may be a read only memory (ROM), but typically at least a portion of the persistent storage allows writing of data, deletion of data and re-writing of data. Some familiar forms of persistent storage include magnetic disks and solid-state storage devices. Operating system 122 may take several forms, such as various known proprietary operating systems or open-source Portable Operating System Interface-type operating systems that employ a kernel. The code included in block 150 typically includes at least some of the computer code involved in performing the inventive methods.

PERIPHERAL DEVICE SET 114 includes the set of peripheral devices of computer 101. Data communication connections between the peripheral devices and the other components of computer 101 may be implemented in various ways, such as Bluetooth connections, Near-Field Communication (NFC) connections, connections made by cables (such as universal serial bus (USB) type cables), insertion-type connections (for example, secure digital (SD) card), connections made through local area communication networks and even connections made through wide area networks such as the internet. In various embodiments, UI device set 123 may include components such as a display screen, speaker, microphone, wearable devices (such as goggles and smart watches), keyboard, mouse, printer, touchpad, game controllers, and haptic devices. Storage 124 is external storage, such as an external hard drive, or insertable storage, such as an SD card. Storage 124 may be persistent and/or volatile. In embodiments where computer 101 is required to have a large amount of storage (for example, where computer 101 locally stores and manages a large set of 3D images) then this storage may be provided by peripheral storage devices 125 designed for storing very large amounts of data, such as a storage area network (SAN) that is shared by multiple, geographically distributed computers.

NETWORK MODULE 115 is a collection of computer software, hardware, and firmware, which allows computer 101 to communicate with other computers through WAN 102. Network module 115 may include hardware, such as modems or Wi-Fi signal transceivers, software for packetizing and/or de-packetizing data for communication network transmission, and/or web browser software for communicating data over the internet. In some embodiments, network control functions and network forwarding functions of network module 115 are performed on the same physical hardware device. In other embodiments (for example, embodiments that utilize software-defined networking (SDN)), the control functions and the forwarding functions of network module 115 are performed on physically separate devices, such that the control functions manage several different network hardware devices. Computer readable program instructions for performing the inventive methods can typically be downloaded to computer 101 from an external computer or external storage device through a network adapter card or network interface included in network module 115.

WAN 102 is any wide area network (for example, the internet) capable of communicating computer data over non-local distances by any technology for communicating computer data, now known or to be developed in the future. In some embodiments, the WAN 102 may be replaced and/or supplemented by local area networks (LANs) designed to communicate data between devices located in a local area, such as a Wi-Fi network. The WAN and/or LANs typically include computer hardware such as copper transmission cables, optical transmission fibres, wireless transmission, routers, firewalls, switches, gateway computers and edge servers.

END USER DEVICE (EUD) 103 is any computer system that is used and controlled by an end user (for example, a customer of an enterprise that operates computer 101) and may take any of the forms discussed above in connection with computer 101. EUD 103 typically receives helpful and useful data from the operations of computer 101. For example, in a hypothetical case where computer 101 is designed to provide a recommendation to an end user, this recommendation would typically be communicated from network module 115 of computer 101 through WAN 102 to EUD 103. In this way, EUD 103 can display, or otherwise present, the recommendation to an end user. In some embodiments, EUD 103 may be a client device, such as thin client, heavy client, mainframe computer, desktop computer and so on.

REMOTE SERVER 104 is any computer system that serves at least some data and/or functionality to computer 101. Remote server 104 may be controlled and used by the same entity that operates computer 101. Remote server 104 represents the machine(s) that collect and store helpful and useful data for use by other computers, such as computer 101. For example, in a hypothetical case where computer 101 is designed and programmed to provide a recommendation based on historical data, then this historical data may be provided to computer 101 from remote database 130 of remote server 104.

PUBLIC CLOUD 105 is any computer system available for use by multiple entities that provides on-demand availability of computer system resources and/or other computer capabilities, especially data storage (cloud storage) and computing power, without direct active management by the user. Cloud computing typically leverages sharing of resources to achieve coherence and economies of scale. The direct and active management of the computing resources of public cloud 105 is performed by the computer hardware and/or software of cloud orchestration module 141. The computing resources provided by public cloud 105 are typically implemented by virtual computing environments that run on various computers making up the computers of host physical machine set 142, which is the universe of physical computers in and/or available to public cloud 105. The virtual computing environments (VCEs) typically take the form of virtual machines from virtual machine set 143 and/or containers from container set 144. It is understood that these VCEs may be stored as images and may be transferred among and between the various physical machine hosts, either as images or after instantiation of the VCE. Cloud orchestration module 141 manages the transfer and storage of images, deploys new instantiations of VCEs and manages active instantiations of VCE deployments. Gateway 140 is the collection of computer software, hardware, and firmware that allows public cloud 105 to communicate through WAN 102.

Some further explanation of virtualized computing environments (VCEs) will now be provided. VCEs can be stored as images. A new active instance of the VCE can be instantiated from the image. Two familiar types of VCEs are virtual machines and containers. A container is a VCE that uses operating-system-level virtualization. This refers to an operating system feature in which the kernel allows the existence of multiple isolated user-space instances, called containers. These isolated user-space instances typically behave as real computers from the point of view of programs running in them. A computer program running on an ordinary operating system can utilize all resources of that computer, such as connected devices, files and folders, network shares, CPU power, and quantifiable hardware capabilities. However, programs running inside a container can only use the contents of the container and devices assigned to the container, a feature which is known as containerization.

PRIVATE CLOUD 106 is similar to public cloud 105, except that the computing resources are only available for use by a single enterprise or organization. While private cloud 106 is depicted as being in communication with WAN 102, in other embodiments a private cloud may be disconnected from the internet entirely and only accessible through a local/private network. A hybrid cloud is a composition of multiple clouds of different types (for example, private, community or public cloud types), often respectively implemented by different vendors. Each of the multiple clouds remains a separate and discrete entity, but the larger hybrid cloud architecture is bound together by standardized or proprietary technology that enables orchestration, management, and/or data/application portability between the multiple constituent clouds. In this embodiment, public cloud 105 and private cloud 106 are both part of a larger hybrid cloud.

The system 100 may further be in communication with additional devices, including hardware accelerators (containing IMC devices), as described earlier in section 1.

While the present invention has been described with reference to a limited number of embodiments, variants, and the accompanying drawings, it will be understood by those skilled in the art that various changes may be made, and equivalents may be substituted without departing from the scope of the present invention. In particular, a feature (device-like or method-like) recited in a given embodiment, variant or shown in a drawing may be combined with or replace another feature in another embodiment, variant or drawing, without departing from the scope of the present invention. Various combinations of the features described in respect of any of the above embodiments or variants may accordingly be contemplated, that remain within the scope of the appended claims. In addition, many minor modifications may be made to adapt a particular situation or material to the teachings of the present invention without departing from its scope. Therefore, it is intended that the present invention is not limited to the particular embodiments disclosed, but that the present invention will include all embodiments falling within the scope of the appended claims. In addition, many other variants than explicitly touched above can be contemplated. For example, other NN architectures and objective functions can be contemplated.

**Claims**

1. A computer-implemented method of optimising quantisation in a neural network (40) having an attention mechanism, wherein a dataflow architecture of the neural network includes quantisation stages ($41_Q$ - $47_Q$) downstream of respective transformation stages (41 - 47), which involve transformations that can be represented through transformation matrices and include offline transformations, and wherein the method comprises:

   optimising (S230) a stage (41, $42_3$) of the transformation stages for subsequent quantisation by a respective one of the quantisation stages ($41_Q$, $42_Q$), by optimising an offline transformation involved in said stage in an unsupervised manner, the offline transformation representable through a dot product of an offline input tensor and an offline transformation matrix, using an objective function designed to reduce a degree of tailedness of a distribution of tensor components of a tensor resulting from said dot product; and
   precomputing (S240) said stage at least partly by performing the optimised offline transformation as an affine transformation based on said dot product, and storing (S245) the precomputed stage to ready (S290) the neural network for inferences.

2. The method according to claim **1,** wherein the offline transformation is optimised (S230) by optimising the offline transformation matrix using said objective function.

3. The method according to claim **2,** wherein

   the affine transformation performed consists of a computation of the dot product of the offline input tensor and the offline transformation matrix as optimised,
   the offline transformation matrix ($R_1$, $R_2$) is preferably a rotation matrix.

4. The method according to any one of claims **1** to **3,** wherein, at optimising the offline transformation, the objective function includes a measure of a standardized moment of degree $2 \times q$ of said distribution, where $q \geq 2$.

5. The method according to claim **4,** wherein said measure is a measure of a kurtosis of said distribution.

6. The method according to any one of claims **1** to **5,** wherein

   two stages (41, 42s) of the transformation stages have a data dependence in the dataflow architecture, whereby an outcome of a first stage (41) of the two stages determines an input tensor involved in a second stage ($42_3$) of the two stages,
   each of the two stages (41, 42s) involves an offline transformation ($R_1$, $R_2$), and
   the step of optimising (S230) a stage is performed in respect of each of the two stages ($R_1$, $R_2$), in an orderly manner and in accordance with said data dependence.

7. The method according to any one of claims **1** to **5,** wherein

   two stages of the transformation stages have a data dependence in the dataflow architecture, whereby an outcome of a first stage (41) of the two stages determines an input tensor involved in a second stage (42, 45) of the two stages, the first stage (41) involves an offline transformation ($R_1$), while the second stage (42) involves this offline transformation ($R_1$) or an inverse transformation ($R_1^{-1}$) thereof, said optimising (S230) a stage is performed in respect of the first stage, and the method further comprises precomputing (S280) the second stage (42, 45), at least partly, after having optimised (S230) the first stage (41), in accordance with the data dependence.

**8.** The method according to any one of claims 1 to 7, wherein

said stage is a first transformation stage (41) of the transformation stages and said offline transformation is a first offline transformation that can be represented through a first offline transformation matrix ($R_1$), whereby the first transformation stage (41) is optimised (S230) for subsequent quantisation by a respective one of the quantisation stages ($41_Q$), the transformation stages further include several second transformation stages (42, 42g), preferably three second transformation stages (42, 42g), which are arranged in parallel, downstream of the first transformation stage (41), and can be represented by a respective dot product of an inverse matrix ($R_1^{-1}$) of the first offline transformation matrix ($R_1$) and a respective weight matrix ($W_q$, $W_k$, $W_v$), and said dataflow architecture (40) preferably comprises a root mean square normalization layer ($41_N$) between the first transformation stage (41) and its respective quantisation stage ($41_Q$).

**9.** The method according to claim **8**, wherein at optimising (S230) the first transformation stage (41), the first offline transformation is constrained to be representable through the first offline transformation matrix ($R_1$) that is an orthogonal matrix.

**10.** The method according to claim **9**, wherein, at optimising (S230) the first transformation stage (41), the first offline transformation is constrained to be representable through this orthogonal matrix by optimising on a Stiefel manifold, more preferably based on an iterative Cayley transform.

**11.** The method according to any one of claims **8** to **10**, wherein the method further comprises, after having optimised (S230) the first offline transformation,

precomputing (S280) each of the several second transformation stages, at least partly, by computing a respective affine transformation in accordance with the respective dot product and an outcome of the first offline transformation, as optimised, and storing (S285) the precomputed stage to ready (S290) the neural network for inferences.

**12.** The method according to claim **11**, wherein

a given second stage ($42_3$) of the several second transformation stages can be represented as a dot product of the inverse matrix ($R_1^{-1}$) of the first offline transformation matrix ($R_1$), the respective weight matrix ($W_v$), and a second offline transformation matrix ($R_2$), and the method further comprises, after having optimised (S230) the first offline transformation matrix and prior to precomputing (S280) the given second stage ($42_3$), optimising (S230) the given second stage (42s) in a same way as the first transformation stage (41), by optimising the second offline transformation matrix ($R_2$), using said objective function, and at optimising (S230) the given second stage ($42_3$), the second offline transformation is preferably constrained to be representable through the second offline transformation matrix ($R_2$) that is a full-rank matrix.

**13.** The method according to claim **12**, wherein

the transformation stages further include a third transformation stage (45), downstream of the first transformation stage (41) and the several second transformation stages (42), the third transformation stage (45) involves a further dot product of an inverse transformation matrix ($R_2^{-1}$) of the second offline transformation matrix ($R_2$), a respective weight matrix ($W_0$), and the first offline transformation matrix ($R_1$), and the method further comprises, after having optimised (S230) the first offline transformation matrix ($R_1$) and the second offline transformation matrix ($R_2$), precomputing (S280) the third transformation stage (45), at least partly, by computing the further dot product in accordance with the first offline transformation matrix ($R_1$) and the second offline transformation matrix ($R_2$) as optimised, and storing (S285) the precomputed third transformation stage to ready the neural network for inferences.

**14.** The method according to claim 13, wherein

the transformation stages further include n additional transformation stages (43) arranged downstream of *n* respective rotary positional embedding stages ($42_R$), themselves arranged downstream of $n$ respective ones of the several second transformation stages (42), where $n \geq 2$ and said given second stage ($42_3$) is distinct from the $n$ respective ones of the several second transformation stages (42), and each of the n additional transformation stages (43) involves a first online transformation matrix ($R_3$).

15. The method according to claim **14,** wherein

the transformation stages further involve a second online transformation matrix ($R_4$) downstream of the second transformation stages (42) and upstream of a respective quantisation stage ($44_Q$), itself upstream of the third transformation stage (45), the third transformation stage (45) further involves an inverse transformation matrix ($R_4^{-1}$) of the second online transformation matrix ($R_4$), whereby the third transformation stage (45) is only partly precomputed (S280), preferably, the transformation stages further involve a third online transformation matrix ($R_5$) as well as an inverse transformation matrix ($R_5^{-1}$) of the third online transformation matrix, downstream of the third transformation stage, wherein, more preferably, each of the first online transformation ($R_3$) and the third online transformation (Rs) is implemented as a Walsh-Hadamard transform.

16. A method of executing a neural network (40) having an attention mechanism, wherein a dataflow architecture of the neural network includes quantisation stages ($41_Q$ - $47_Q$) downstream of respective transformation stages, which involve transformations that can be represented through transformation matrices and include offline transformations, wherein the method comprises:

optimising quantisation in the neural network (40) according to the method of any one of claims **1** to **15,** and executing (S295) the neural network (40) for inferencing purposes.

17. A computer program for optimising quantisation in a neural network (40) having an attention mechanism, wherein a dataflow architecture of the neural network includes quantisation stages ($41_Q$ - $47_Q$) downstream of respective transformation stages, which involve transformations that can be represented through transformation matrices and include offline transformations, the computer program comprising software code adapted to perform a method according to any one of claims **1** to **16** when executed by processing means.

100 ⌇

COMPUTER 101

PROCESSOR SET 110

PROCESSING CIRCUITRY 120     CACHE 121

COMMUNICATION FABRIC 111

VOLATILE MEMORY 112

PERSISTENT STORAGE 113

OPERATING SYSTEM 122

SCANNING MODULE, OPTIMIZATION MODULE, PRECOMPUTATION MODULE
150

PERIPHERAL DEVICE SET 114

UI DEVICE SET 123     STORAGE 124     OTHER STORAGE 125

NETWORK MODULE 115

WAN 102

END USER DEVICE 103

REMOTE SERVER 104

REMOTE DATABASE 130

PRIVATE CLOUD 106

GATEWAY 140

PUBLIC CLOUD 105

CLOUD ORCHESTRATION MODULE 141     HOST PHYSICAL MACHINE SET 142

VIRTUAL MACHINE SET 143     CONTAINER SET 144

FIG. 1

FIG. 2

FIG. 3

FIG. 4

**EUROPEAN SEARCH REPORT**

Application Number

EP 24 21 3065

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZECHUN LIU ET AL: "SpinQuant: LLM quantization with learned rotations", ARXIV.ORG, CORNELL UNIVERSITY LIBRARY, 201 OLIN LIBRARY CORNELL UNIVERSITY ITHACA, NY 14853, 7 October 2024 (2024-10-07), XP091899398, * page 1 - page 6; figures 1-5 * | 1-17 | INV. G06N3/0495 G06N3/0442 G06N3/045 G06N3/0475 |
| Y | MORAN SHKOLNIK ET AL: "Robust Quantization: One Model to Rule Them All", ARXIV.ORG, CORNELL UNIVERSITY LIBRARY, 201 OLIN LIBRARY CORNELL UNIVERSITY ITHACA, NY 14853, 18 February 2020 (2020-02-18), XP081602365, * page 1 - page 7; figure 3 * | 1-17 | |
| A | PRANNAY KAUL ET AL: "From Attention to Activation: Unravelling the Enigmas of Large Language Models", ARXIV.ORG, CORNELL UNIVERSITY LIBRARY, 201 OLIN LIBRARY CORNELL UNIVERSITY ITHACA, NY 14853, 22 October 2024 (2024-10-22), XP091916294, * Algortihm 1; page 1 - page 7 * | 1-17 | TECHNICAL FIELDS SEARCHED (IPC) G06N |
| A | CHENG ZHANG ET AL: "Revisiting Block-based Quantisation: What is Important for Sub-8-bit LLM Inference?", ARXIV.ORG, CORNELL UNIVERSITY LIBRARY, 201 OLIN LIBRARY CORNELL UNIVERSITY ITHACA, NY 14853, 21 October 2023 (2023-10-21), XP091641379, * the whole document * | 1-17 | |

The present search report has been drawn up for all claims

| Place of search | Date of completion of the search | Examiner |
|---|---|---|
| The Hague | 28 April 2025 | Keresztury, Bence |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 745 845 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ASHKBOOS, SALEH et al.** Quarot: Outlier-free 4-bit inference in rotated LLMs.. *arXiv:2404.00456*, 2024
- **LIU, ZECHUN et al.** SpinQuant: LLM quantisation with learned rotations.. *arXiv:2405.16406*, 2024

- **LI, JUN ; LI FUXIN ; SINISA TODOROVIC**. Efficient Riemannian Optimization on the Stiefel Manifold via the Cayley Transform. *arXiv:2002.01113*, 2020